# EUROPÄISCHE PATENTSCHRIFT

(11) **EP 0 902 948 B1**
(45) Veröffentlichungstag und Bekanntmachung des Hinweises auf die Patenterteilung: **16.08.2000**
(21) Anmeldenummer: 97917983.5
(22) Anmeldetag: 13.05.1997
(51) Int. Cl.: G11B 33/04

(54) **DATENTRÄGERVERPACKUNG**
PACKAGING FOR DATA MEDIA
EMBALLAGE POUR SUPPORTS DE DONNEES

(30) Priorität: 05.06.1996 CH 142096
(43) Veröffentlichungstag der Anmeldung: 24.03.1999
(73) Patentinhaber: Pawi Verpackungen AG, 8411 Winterhur (CH)
(72) Erfinder: KLEINE-MOELLHOFF, Stefan, CH-8307 Effretikon (CH)
(74) Vertreter: EGLI-EUROPEAN PATENT ATTORNEYS
(86) Internationale Anmeldenummer: CH9700187
(87) Internationale Veröffentlichungsnummer: WO9747008

(56) Entgegenhaltungen:
- EP-A- 0 503 171
- EP-A- 0 698 883
- WO-A-95/27286
- DE-A- 4 400 048
- US-A- 5 186 327
- US-A- 5 427 236

## Beschreibung

Die Erfindung betrifft in einem ersten Aspekt eine Verpackung zur Aufnahme von dünnen, im wesentlichen runden, allenfalls schadennehmenden Scheiben, welche eine - in ihren Dimensionen genormte - zentrale Öffnung, die zum Einführen der Spindel eines Gerätes, welches zum Abrufen bzw. Lesen der gespeicherten Daten geeignet ist, aufweisen. Datenträger wie Compact Disks (CD), Video Disks (VD) oder Mini Disks (MD) weisen gerade diese Form auf, weshalb sich die erfindungsgemässe Verpackung zum Lagern, Ausstellen, Verkaufen und Transportieren insbesondere solcher Datenträger eignet. In einem zweiten Aspekt betrifft die Erfindung ein Verfahren und eine Vorrichtung zur Herstellung dieser Verpackung.

Bekannt sind vor allem, wie z.B. in EP 0 420 350 (**D1**) beschrieben, CD-Verpackungen aus durchsichtigem Kunststoffmaterial in verschiedenen Ausführungsformen. Jene Verpackung besteht aus einer oder mehreren Schachteln für je eine oder zwei CDs. Die Schachteln sind über Gelenke untereinander bzw. mit Deckeln verbunden, so dass jede gewünschte CD einzeln der aufgeklappten Verpackung entnommen werden kann. Ein- oder mehrfarbig bedruckte Einlagen (sogenannte "inlay cards") - vorzugsweise aus Papier - informieren den interessierten Käufer bzw. Anwender der CD z.B. über den Inhalt bzw. die Möglichkeiten derselben. Oft ist der Umfang der Informationen so gross, dass ein kleines Heft oder Büchlein (ein sogenanntes "booklet") in die Verpackung der CD gelegt wird. Derartige CD-Verpackungen enthalten also sowohl Kunststoff als auch Papier.

Die zunehmende Einsicht, dass solche Datenträgerverpackungen in riesiger Zahl - nicht nur möglichst umweltschonend hergestellt - sondern auch ebenso entsorgt werden müssen, führte mehr und mehr zur Suche nach Ersatzmaterialien für die aus nicht-erneuerbaren Rohstoffen hergestellten Kunststoff Verpackungen. So wurde der Plastikanteil der CD-Verpackungen beispielsweise auf einen relativ stabilen Boden (US 5,307, 927, **D2**; US 5, 236,081, **D3**) reduziert, der - verbunden mit der Verpackung aus Papier oder Karton - die Funktion der Aufnahme einer CD erfüllt. Eine andere Schrift (US 5,379, 890, **D4**) beschreibt einen ebenfalls stabilen Kunststoffträger, der in eine aus einem Stück gefaltete Kartonschachtel eingeschoben werden kann. In einer weiteren Schrift (US 5, 421,453, **D5**) wird - als weitere mögliche Reduktion des Kunststoffanteils an der Verpackung - eine dünne, flexible Kunststoffeinlage für eine aus einem Stück gefaltete Kartonschachtel beschrieben. Die EP 0 493 983 (**D6**) schliesslich schlägt vor, kleine runde Scheiben, welche im wesentlichen nur die Auflage und den Schnappmechanismus - welche beide z.B. aus D1 bekannt sind - für die Aufnahme der CD umfassen, auf eine gefaltete Papier- oder Kartonhülle zu kleben. Allen diesen Veröffentlichungen einer *ersten Gruppe* (D1 bis D6) ist jedoch gemeinsam, dass sie aus dem nicht nachwachsenden Rohstoff Erdöl produzierten Material Kunststoff bzw. aus einer Kombination von Kunststoff und Papier bestehen. Setzt man sich die Wiederverwertung des zur CD-Verpackung verwendeten Materials zum Ziel, so müssen die Materialien getrennt werden, was einen enormen technischen und finanziellen Aufwand bedeuten kann.

Verpackungen einer *zweiten Gruppe* aus nur einem Material, sogenanntem Monomaterial, wurden deshalb vorgeschlagen. Neben dem Vorteil einer einfachen Entsorgung bzw. Wiederverwertung brachte dies auch eine erhebliche Gewichtseinsparung des Verpackungsmaterials mit sich. GB 2 272 685 (**D7**) beschreibt aus einem Stück Papier gefaltete, balgähnliche Seitenteile aufweisende, taschenförmige Behälter. In diese Taschen werden Datenträger in unüblicher Weise seitlich eingeschoben, so dass auf eine bereits zum Standard gewordene Beschickung mit CDs verzichtet werden muss. Diese Taschen können wahlweise in einen weiteren, aus dem gleichen Material hergestellten Behälter geschoben werden, was eine verbesserte Stabilität der Verpackung gewährleistet. Trotzdem liegen die Bereiche der CD, von denen Daten abgerufen werden können, mindestens teilweise direkt auf der Verpackung auf, so dass Schleifspuren in der CD-Oberfläche befürchtet werden müssen. Weitere und vor allem stabilere Verpackungen aus Monomaterial sind aus WO 93/21086 (**D8**) und US 5,422,875 (**D9**) bekannt. Diese halten - im Unterschied zu der vorher beschriebenen D7 - die CDs seitlich am Umfang über speziell ausgebildete Auflagen oder Nocken fest, damit die Oberflächenbereiche der CD, welche abrufbare Daten trägt, nicht direkt mit der Verpackung in Berührung kommen kann. Weil in D8 eine Art Schnappverschluss den Rand der CD festhält und in D9 die Datenträger seitlich eingeschoben werden müssen, kommt auch hier eine automatisierte Standardbeschickung der Verpackung kaum in Frage. Extrem leicht ausgebildet ist die, aus nur einem Faltblatt Papier bestehende Verpackung in US 5,472,083 (**D10**). Die datentragende Oberfläche einer CD wird hier mindestens teilweise mit der Verpackung in Berührung gebracht, was wiederum zusammen mit der geringen Stabilität als Nachteil gewertet werden kann. Diese *zweite Gruppe* (D7 bis D10) von Datenträgerverpackungen weist vor allem durch die notwendigen, alternativen Beschickungsarten mit CDs bzw. die geringe Stabilität wesentliche Nachteile auf. Ebenfalls ungenügend erreicht ist das Ziel der Verwendung von Monomaterial in US 5,427,236 (**D13**), weil, trotz weitgehendem Vermeiden von Kunststoffmaterial, der zentrale Aufnehmer für die CD immer noch solches umfasst. Zudem lässt auch hier die Stabilität der Verpackung zu wünschen übrig.

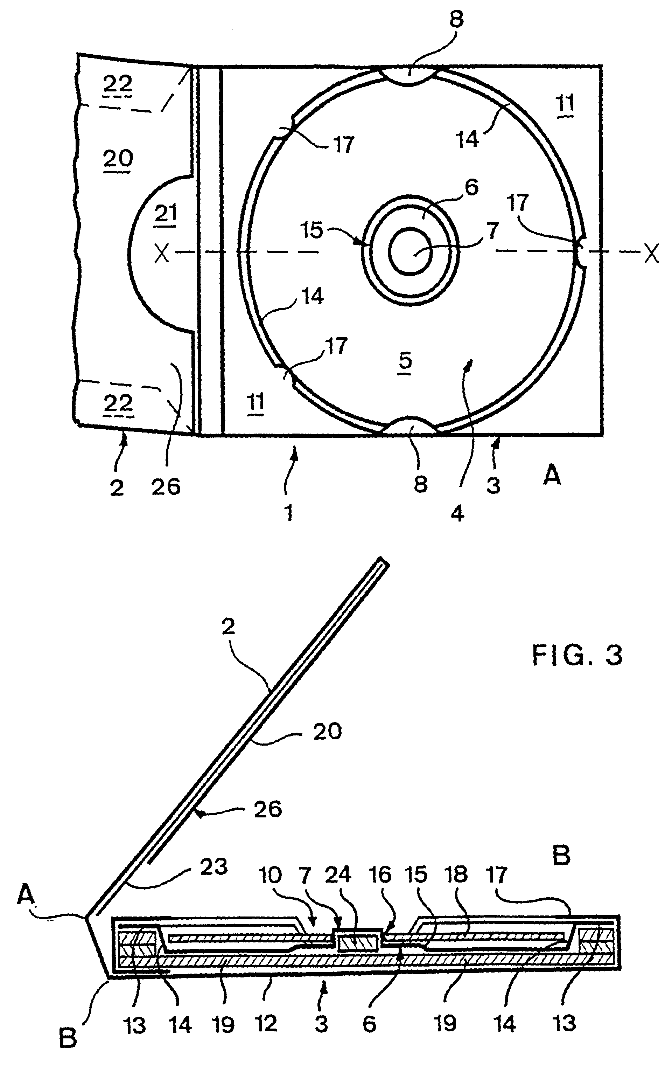

Die Aufgabe der vorliegenden Erfindung besteht darin, eine Verpackung für scheibenförmige Datenträger, insbesondere CDs, VDs oder MDs bereitzustellen, welche die Forderung nach der Verwendung eines einheitlichen Verpackungsmaterials aus ökologisch unbedenklichem und nachwachsendem Rohstoff, Wirtschaftlichkeit, Unzerbrechlichkeit, Stabilität, Bedruckbarkeit und geringem Gewicht verbindet mit der Möglichkeit, CDs standardmässig, d.h. vorzugsweise automatisiert, einzusetzen und diese so zu lagern, dass sie ausschliesslich in Bereichen, welche keine abrufbaren Informationen tragen, mit der Verpackung in Berührung kommen.
Eine weitere Datenträgerverpackung ist aus EP 0 698 883 bekannt. Dieses Dokument wird als nächstliegender Stand der Technik betrachtet und offenbart eine Datenträgerverpackung, welche eine Klappkartonverpackung und eine Halterung aufweist, welche weitestgehend aus einem biologisch abbaubaren Material (mit zumindest 25 Gew.%, vorzugsweise 80 Gew.% Stärke) im Spritzgussverfahren gefertigt wird. Zur Erzielung eines elastisch federnden Aufnahmeteils (vgl. Segmente 61 in Fig. 3) mit einem ähnlichen Verhalten wie ein spritzgegossenes Kunststoffelement - als dessen direkter Ersatz es dienen soll - wird dieses Spritzguss-Element aus natürlichen Polymeren mit Zuschlägen, wie z.B. pflanzlichen Fasern, versetzt. Diese Verpackung wird der gestellten Aufgabe nicht gerecht, weil die Forderung nach einem einheitlichen Verpackungsmaterial nicht erfüllt ist: Der hohe Anteil von Stärke verhindert den biologischen Abbau nicht, die Wiederverwendung des Verpackungsmaterials wird dadurch aber zumindest erschwert.
Aus DE 44 00 048 ist eine Verpackung für eine CD in Form einer verschliessbaren Einlegehülle aus Papier bekannt. Damit der Datenträger aus dieser Verpackung herausgenommen werden kann, muss diese Hülle zumindest teilweise zerstört werden; sie weist zu diesem Zweck eine Perforation auf. Zur weiteren Aufbewahrung soll eine der üblichen Kunststoffschachteln dienen. Diese Verpackung wird der gestellten Aufgabe nicht gerecht, weil zur sicheren, vor Beschädigung schützenden Aufbewahrung eine Kunststoffschachtel benötigt wird und damit die Forderung nach dem einheitlichen Verpackungsmaterial nicht erfüllt ist. Zudem kommt eine Oberfläche der Verpackung mit den datentragenden Teilen der CD in Berührung, was vermieden werden soll.

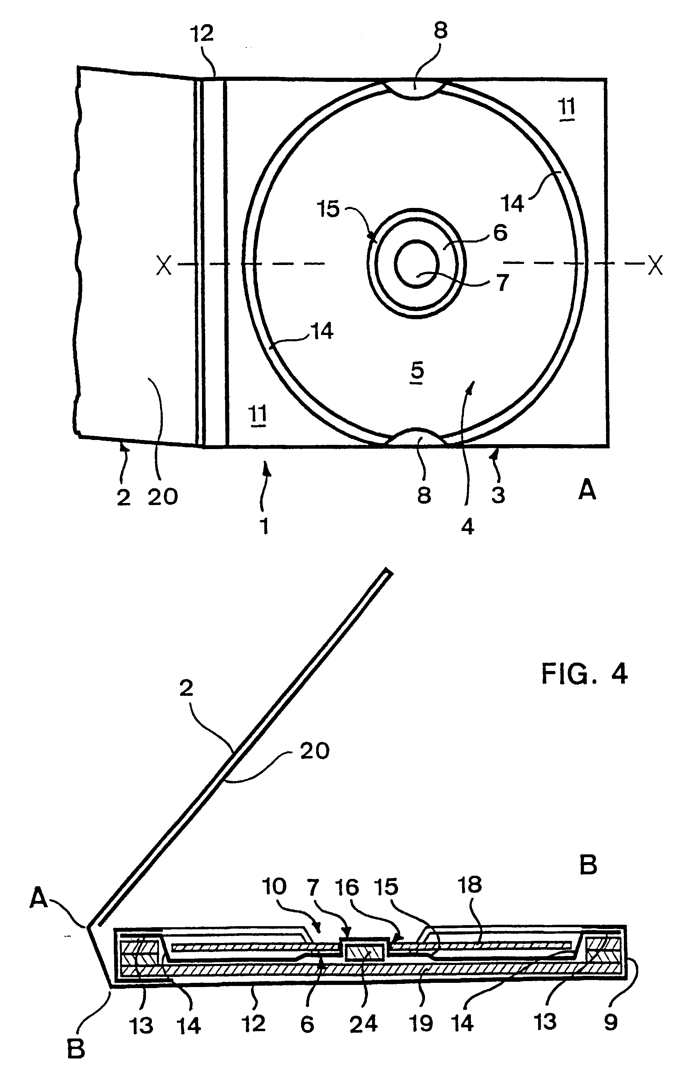

Eine Kartonverpackung ist aus WO 95/27286 bekannt. Sie weist einen Aufnahmeteil (mit oder ohne Deckel) und eine Hülle auf, in welche der Aufnahmeteil - zum Verhindern des Aufklappens des Deckels bzw. des Herausfallens des Datenträgers) eingeschoben wird. Eine weitere Datenträgerverpackung aus Monomaterial ist aus US 5,186,327 bekannt. Diese besteht aus einem Aufnahmeteil, in den der Datenträger eingesetzt wird und aus einer Hülle, in welche der Aufnahmeteil eingeschoben wird (siehe dort Figuren 3 und 4). Zum Herausnehmen des Datenträgers muss der Aufnahmeteil zuerst wieder aus der Hülle herausgezogen werden. Diese beiden Verpackungen werden der gestellten Aufgabe nicht gerecht, weil durch sie die Forderung nach standardmässiger Beladung mit einem Datenträger nicht erfüllt wird.

Die Aufgabe wird, gemäss einem ersten Aspekt, durch das Verfahren nach Anspruch 1 erfüllt. Bevorzugte Weiterbildungen dieses erfindungsgemässen Verfahrens ergeben sich aus den abhängigen Ansprüchen 2 bis 10. Gemäss einem zweiten Aspekt wird die Aufgabe durch die Datenträgerverpackung nach Anspruch 11 erfüllt. Bevorzugte Weiterbildungen dieser erfindungsgemässen Verpackung ergeben sich aus den abhängigen Ansprüchen 12 bis 23.

Somit wird eine Datenträgerverpackung aus Papier bzw. Karton bereitgestellt, deren natürlicher Rohstoff Holz in grosser Menge zur Verfügung steht und auch nachwächst.

Das Grundmaterial solcher Papiere oder Kartons besteht aus Naturfasern, welche als Primärfasern in Form von Zellulose aus verschiedenen Baumarten bzw. als Sekundärfasern durch Recycling von Altpapier und -karton gewonnen werden. Diese erfindungsgemässe Verpackung wird, gemäss weiteren Aspekten der Erfindung, durch ein Verfahren bzw. eine Vorrichtung hergestellt, welche das Bearbeiten mittels Rillen, Falten und Kleben bzw. der Tiefverformung von Teilen der Verpackung umfasst. Die Herstellung wird einfach, rasch und automatisiert ausgeführt und ist deshalb auch wirtschaftlich. Diese Verpackung aus einem Monomaterial zeichnet sich durch eine - dem verwendeten Material Papier bzw. Karton entsprechende - Unzerbrechlichkeit und Bedruckbarkeit aus. Die hohe Stabilität wird dadurch erreicht, dass - im Unterschied zu D4-D6, D10 und D11 - ein Füllmaterial vorzugsweise aus Wellpappe oder dergleichen verwendet wird, so dass keine grossen zusammendrückbaren Hohlräume zurückbleiben. Die Gewichtsreduktion beträgt je nach Vergleichsverpackung bis zu 50%. CDs können - in Verwendung einer erfindungsgemässen Ausführungsform der Verpackung - mit standardmässigen Methoden, z.B. automatisiert eingesetzt bzw. beschickt und so gelagert werden, dass die CDs ausschliesslich in Bereichen, welche keine abrufbaren Informationen tragen mit der Verpackung in Berührung kommen. Diese Datenträger sind von der Boden- und der Deckelinnenfläche beabstandet und liegen nur im zentralen bzw. peripheren, keine abrufbaren Daten aufweisenden Teil auf einer treppenartigen Unterlage auf. Dabei kann ein, in die zentrale - in ihren Dimensionen genormte - Öffnung der CD eingreifender, Aufnahmezapfen die CD so fixieren, dass der Datenträger in allen Richtungen der Verpackung unbeweglich gehalten ist.

Als Vorteil der vorliegenden erfindungsgemässen Datenträgerverpackung gegenüber bekannten CD-Verpackungen aus Mischmaterial (erste Gruppe) kann die Bioabbau- bzw. Biodegradierbarkeit oder Kompostierbarkeit, die Nutzung als erneuerbare Energiequelle oder aber die Wiederverwertung als Lieferant von Sekundär- bzw. Recyclingfasern genannt werden. Als Vorteil gegenüber bekannten CD-Verpackungen aus Monomaterial (zweite Gruppe) kann die erhöhte Stabilität, die standardmässige Beschickbarkeit und schonendste Aufbewahrung der Datenträger in der erfindungsgemässen Datenträgerverpackung sowie eine den wahrscheinlich weitestverbreiteten Verpackungen (D1 und D2) vergleichbare Verwendung und gegebenenfalls sogar anpassbare Dimension genannt werden.

In den folgenden Figuren sind bevorzugte, beispielhafte Ausführungsformen der erfindungsgemässen Verpackung dargestellt. Es zeigen:
- Fig. 1: Eine 3D-Darstellung einer teilweise geöffneten Datenträgerverpackung, gemäss einer ersten bzw. zweiten Ausführungsform;
- Fig. 2: Eine Datenträgerverpackung, gemäss einer ersten Ausführungsform, welche in
a) geöffnet in einer Draufsicht und in
b) in einer leicht vergrösserten Schnittdarstellung, entsprechend der in a) mit X--X bezeichneten Linie, dargestellt ist;
- Fig. 3: Eine Datenträgerverpackung, gemäss einer zweiten Ausführungsform, welche in
a) geöffnet in einer Draufsicht und in
b) in einer leicht vergrösserten Schnittdarstellung, entsprechend der in a) mit X--X bezeichneten Linie, dargestellt ist;
- Fig. 4: Eine Datenträgerverpackung, gemäss einer dritten Ausführungsform, welche in
a) geöffnet in einer Draufsicht und in
b) in einer leicht vergrösserten Schnittdarstellung, entsprechend der in a) mit X--X bezeichneten Linie, dargestellt ist;
- Fig. 5: Eine Datenträgerverpackung, gemäss einer vierten Ausführungsform, welche in
a) geöffnet in einer Draufsicht und in
b) in einer leicht vergrösserten Schnittdarstellung, entsprechend der in a) mit X--X bezeichneten Linie, dargestellt ist;
- Fig. 6: Eine 3D-Darstellung eines Aufnahmeelements, gemäss einer zweiten bzw. dritten Ausführungsform, wobei in
a) das vorzugsweise mittels Tiefziehen hergestellte Aufnahmeelement und in
b) ein Stützelement, abgebildet ist;
- Fig. 7: Eine Draufsicht der Abwicklung eines Stabilisierungselements;
- Fig. 8: Eine Draufsicht der Abwicklung eines Hüllelements, gemäss einer ersten bzw. zweiten Ausführungsform;
- Fig. 9: Eine Draufsicht der Abwicklung eines Hüllelements, gemäss einer dritten bzw. vierten Ausführungsform;
- Fig. 10: Eine Tiefziehform, gemäss einer zweiten, dritten bzw. vierten Ausführungsform einer Datenträgerverpackung.

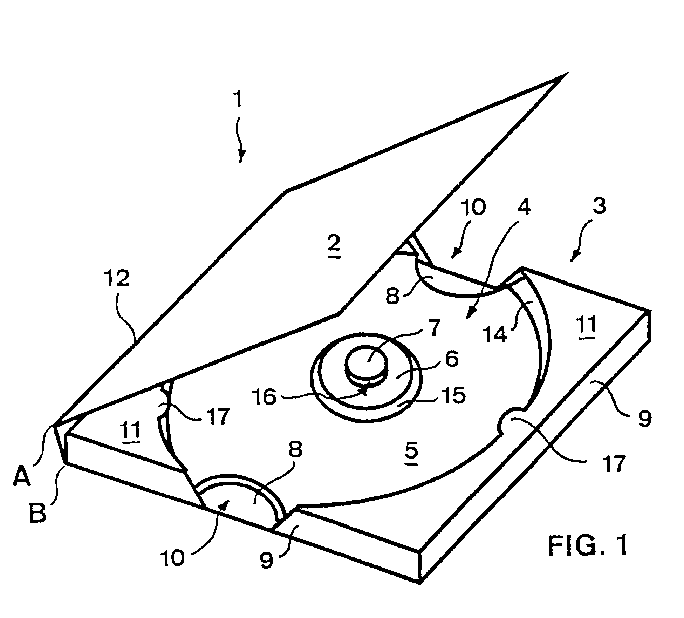

Die Datenträgerverpackung 1 in Fig. 1 umfasst einen Deckel 2 und einen Aufnahmeteil 3 für einen Datenträger, der etwas angehoben ist, dabei wird er um die Achsen A bzw. B geklappt. Das Aufnahmeelement 4 mit einer im wesentlichen runden Vertiefung 5 und einer dazu vorzugsweise konzentrischen Erhebung ist ersichtlich. Ein zylindrischer Aufnahmezapfen 7 ist vorzugsweise ebenfalls konzentrisch auf der Erhebungsfläche 6 angeordnet. Die äusseren Durchmesser der Erhebungsfläche 6 bzw. des Aufnahmezapfens 7 sind dabei etwas kleiner als der Durchmesser des zentralen, keine Daten tragenden Bereiches eines einzusetzenden Datenträgers bzw. der zentralen, genormten Öffnung eines einzusetzenden Datenträgers, welche bekanntlich zur Aufnahme einer Antriebsspindel eines Datenlesegerätes dient. Auf beiden Seiten der Datenträgerverpackung sind Griffmulden 8 sichtbar, diese erleichtern das Herausnehmen eines Datenträgers. Im Bereich der Griffmulden 8 sind die Seitenwände 9 der Datenträgerverpackung ausgeschnitten. Abweichend von der Darstellung in Fig. 1 kann in einer weiteren Ausführungsform auf die Griffmulden 8 bzw. die Ausschnitte 10 mindestens teilweise verzichtet werden. Deckflächen 11 des Hüllelements 12 decken die äusseren, hochliegenden Teile des Aufnahmeelements 4 ab. Die hochliegenden Teile des Aufnahmeelements 4 sind über senkrechte, vorzugsweise kreisförmig und leicht konisch geformte Innenwände 14 mit dem Boden der Vertiefung 5 verbunden bzw. einstückig geformt. Ebenso kann die vorzugsweise konisch ausgebildete Erhebungsstufe 15 und der mindestens annähernd zylindrische Aufnahmezapfen 7 mit seiner im wesentlichen senkrechten Stirnfläche 16 mit dem Rest des Aufnahmeelements verbunden bzw. einstückig geformt sein. Die Deckflächen 11 weisen, entsprechend einer ersten bzw. zweiten Ausführungsform, angeformte Halteclips 17 auf, welche in im wesentlichen horizontaler Richtung über die Innenwände 14 in die Vertiefung 5 überstehen. Abweichend von der in Fig. 1 abgerundet dargestellten Form, können die Halteclips 17 eine beispielsweise polygonale Ausbildung aufweisen.

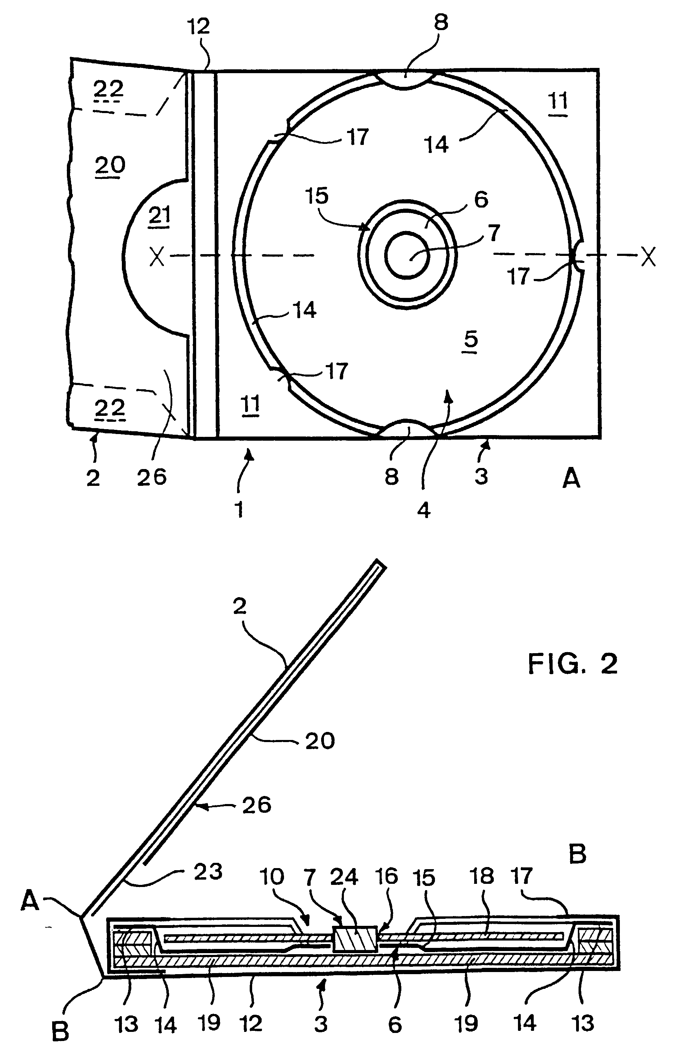

Im folgenden werden, anhand der Figuren 2 bis 5, vier bevorzugte Ausführungsformen einer erfindungsgemässen, schachtelförmigen Datenträgerverpackung vorgestellt. Selbstverständlich ist diese Aufzählung nicht abschliessend; ebenso sind beliebige Kombinationen der untenstehend beschriebenen Merkmale denkbar und werden von der vorliegenden Erfindung umfasst.

Die in Fig. 2 dargestellte, erste Ausführungsform der erfindungsgemässen Datenträgerverpackung umfasst einen vorzugsweise zylindrischen, vom Aufnahmeelement 4 unabhängig hergestellten Aufnahmezapfen 7, der vorzugsweise aus Vollpappe hergestellt ist und dessen Durchmesser kleiner ist als die in ihren Dimensionen genormte, zentrale Öffnung eines Datenträgers. Die konischen Innenwände 14 verbinden den Boden der Vertiefung 5 absatzlos mit den hochliegenden Teilen 13 des Aufnahmeelements 4 und geben dem Datenträger die Möglichkeit, beim Einsetzen oder Herausnehmen mit seinem peripheren Randbereich Bewegungen bis unter das Niveau der Deckfläche 11 auszuführen. Der eingesetzte Datenträger 18 ist an seinem Umfang von den Innenwänden 14 beabstandet und liegt nur mit dem Bereich, der keine abrufbaren Daten trägt auf der Erhebungsfläche 6 auf. Die datentragenden Bereiche einer CD sind also frei schwebend gelagert und können keine Schleifspuren durch unbeabsichtigte Kontakte mit der Datenträgerverpackung erleiden. Die Deckflächen 11 weisen angeformte Halteclips 17 auf, welche in im wesentlichen horizontaler Richtung über die Innenwände 14 in die Vertiefung 5 überstehen.
Wird ein Datenträger, beispielsweise eine CD eingesetzt, so wird sie über ihre zentrale Öffnung mit dem in diese eingreifenden Aufnahmezapfen 7 zentriert. Ein leichtes Drücken auf den Datenträger bringt seine peripheren Randbereiche auf ein Niveau unterhalb der Deckfläche 11 und erlaubt dadurch den Halteclips 17 ein federndes Ausweichen um die Peripherie des Datenträgers herum und ein ebenso federndes Wiedereinnehmen ihrer Ausgangsposition. Der eingesetzte Datenträger wird, gemäss dieser ersten Ausführungsform, durch den Aufnahmezapfen am Ausführen einer zum Boden der Vertiefung 5 des Aufnahmeelements 4 parallelen Bewegung gehindert, so dass die Randbereiche des Datenträgers die Innenwände 14 gerade nicht berühren können. Das Herausfallen des Datenträgers aus der Verpackung bzw. das Ausführen einer unbeabsichtigten, zum Boden der Vertiefung 5 des Aufnahmeelements 4 senkrechten Bewegung wird durch die vorzugsweise drei, in die Deckflächen 11 integrierten, Halteclips 17 verhindert. In weiteren Ausführungsformen können auch mehr oder weniger Halteclips 17 vorgesehen sein. Besonders bewährt haben sich in der Praxis drei Halteclips, da immer mindestens ein Halteclip 17 auf beiden Seiten einer zufällig gewählten, die Erhebungsfläche 6 mindestens streifenden, Kippachse liegt und deshalb erfolgreich eine unbeabsichtigte Kippbewegung des Datenträgers und damit dessen Herausfallen verhindert. Beim Herausnehmen des Datenträgers sind wiederum drei Halteclips 17 bevorzugt, weil dann nur die Federkraft eines Halteclips 17 überwunden werden muss. Das Herausnehmen eines Datenträgers aus seiner Verpackung wird durch die vorhandenen Ausschnitte 10 in den Seitenwänden 9 und den Griffmulden 8 erheblich erleichtert.
Die Form des Aufnahmeelementes 4 wird durch ein entsprechend gefaltetes, vorzugsweise in seiner endgültigen Form verklebtes Stabilisierungselement 19 gestützt. Der Aufnahmezapfen 7 reicht durch eine Aussparung im Aufnahmeelement 4 bis auf das Stabilisierungselement 19, mit dem er verklebt ist. Der Deckel 2 umfasst einen Innenteil 20 mit einer Grifföffnung 21. Der Innenteil 20 ist mittels Klebelaschen 22 am Aussenteil des Deckels 2 so befestigt, dass beispielsweise eine Broschüre 23 bzw. eine "inlay card" eingeschoben werden kann. Abweichend von der Darstellung in Fig. 2 kann in einer weiteren Ausführungsform vorgesehen sein, dass die Grifföffnung 21 auf einer der anderen drei Seiten des Deckels 2 liegt, dass also die "inlay card" entsprechend der Blickrichtung in Fig. 2a) von oben, von links oder von unten eingeschoben werden kann. Des weiteren kann vorgesehen sein, dass eine mehrere Seiten umfassende Broschüre, ein "booklet" eingeschoben bzw. am Innenteil 20 des Deckels 2 befestigt ist bzw. auf eine Tasche verzichtet wird. Klar ersichtlich ist das Klappen des Deckels um die Achsen A und B beim Öffnen oder Schliessen der Datenträgerverpackung.

Die in Fig. 3 dargestellte, zweite Ausführungsform der erfindungsgemässen Datenträgerverpackung umfasst, im Unterschied zur ersten Ausführungsform, einen mindestens annähernd zylindrischen, einstückig mit dem Aufnahmeelement 4 hergestellten Aufnahmezapfen 7, dessen Durchmesser kleiner ist als die zentrale Öffnung eines Datenträgers. Der Aufnahmezapfen 7 wird durch ein Stützelement 24 ausgefüllt, das bis auf das Stabilisierungselement 19 reicht und mit diesem verklebt ist. Die Form des Aufnahmeelementes 4 wird, entsprechend der ersten Ausführungsform, durch ein Stabilisierungselement 19 gestützt.
Das Einsetzen, Lagern und Herausnehmen eines Datenträgers in eine Verpackung, gemäss dieser zweiten Ausführungsform, ist mit jenem der ersten Ausführungsform identisch. Der eingesetzte Datenträger 18 ist an seinem Umfang von den Innenwänden 14 beabstandet und liegt nur mit dem Bereich, der keine abrufbaren Daten trägt auf der Erhebungsfläche 6 auf. Die datentragenden Bereiche einer CD sind also frei schwebend gelagert und können keine Schleifspuren durch unbeabsichtigte Kontakte mit der Datenträgerverpackung erleiden. Die Ausbildung einer Tasche 26, welche einen Innenteil 20 und eine Grifföffnung 21 sowie Klebelaschen 22 umfasst, kann in einer weiteren Ausführungsform weggelassen werden, indem der Innenteil 20 direkt mit dem Aussenteil des Deckels 2 verklebt wird. Des weiteren kann vorgesehen sein, dass eine mehrere Seiten umfassende Broschüre, ein "booklet" am Innenteil 20 des Deckels 2 befestigt ist bzw. auf eine Tasche verzichtet wird.

Die in Fig. 4 dargestellte, dritte Ausführungsform der erfindungsgemässen Datenträgerverpackung umfasst, entsprechend der zweiten Ausführungsform, einen vorzugsweise zylindrischen, einstückig mit dem Aufnahmeelement 4 hergestellten Aufnahmezapfen 7, dessen Durchmesser jedoch praktisch identisch ist zu jenem der zentralen Öffnung eines Datenträgers. Durch diese annähernd gleichen Durchmesser wird zwischen einem eingesetzten Datenträger 18 und den Stirnflächen 16 des Aufnahmezapfens 7 ein Reibschluss wirksam, dank dessen der Datenträger am Herausfallen aus der Verpackung gehindert wird. Auf Halteclips kann deshalb verzichtet werden. Der eingesetzte Datenträger 18 ist an seinem Umfang von den Innenwänden 14 beabstandet und liegt nur mit dem Bereich, der keine abrufbaren Daten trägt auf der Erhebungsfläche 6 auf. Die datentragenden Bereiche einer CD sind also frei schwebend gelagert und können keine Schleifspuren durch unbeabsichtigte Kontakte mit der Datenträgerverpackung erleiden.
Wird ein Datenträger, beispielsweise eine CD eingesetzt, so wird sie über ihre zentrale Öffnung mit dem - diese zentrale Öffnung im wesentlichen ausfüllenden und in diese eingreifenden - Aufnahmezapfen 7 zentriert und reibschlüssig fixiert. Der eingesetzte Datenträger wird durch den Aufnahmezapfen 7 am Ausführen einer zum Boden der Vertiefung 5 des Aufnahmeelements 4 parallelen sowie einer dazu senkrechten Bewegung gehindert. Beim Herausnehmen des Datenträgers muss lediglich die Reibkraft am Aufnahmezapfen überwunden werden. Die Form des Aufnahmeelementes 4 wird, entsprechend der ersten Ausführungsform, durch ein Stabilisierungselement 19 gestützt.
Der Deckel 2 kann, abweichend von der Darstellung in Fig. 4, eine Tasche 26 für eine "inlay card" bzw. ein "booklet" aufweisen, wobei das letztere auch am Innenteil 20 des Deckels 2 befestigt sein kann.

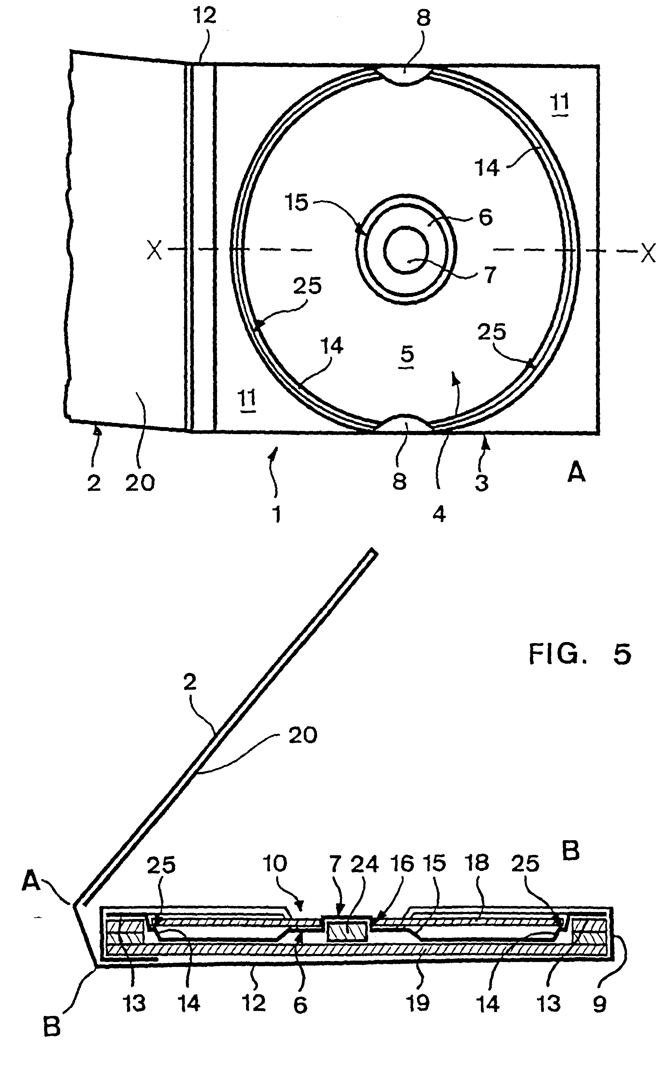

Die in Fig. 5 dargestellte, vierte Ausführungsform der erfindungsgemässen Datenträgerverpackung umfasst, entsprechend der dritten Ausführungsform, einen vorzugsweise zylindrischen, einstückig mit dem Aufnahmeelement 4 hergestellten Aufnahmezapfen 7, dessen Durchmesser praktisch identisch ist zu jenem der zentralen Öffnung eines Datenträgers und mit diesem einen Reibschluss bewirkt, dank dessen der Datenträger am Herausfallen aus der Verpackung gehindert wird. Der eingesetzte Datenträger 18 liegt mit dem zentralen Bereich - der keine abrufbaren Daten trägt - auf der Erhebungsfläche 6 auf und wird in seinem peripheren, ebenfalls keine abrufbaren Daten tragenden Bereich zusätzlich durch eine, mit den Innenwänden 14 einstückig hergestellte, Zwischenstufe 25 gestützt. Das Einsetzen, Lagern und Herausnehmen eines Datenträgers in eine Verpackung, gemäss dieser vierten Ausführungsform, ist mit jenem der dritten Ausführungsform identisch. Die datentragenden Bereiche einer CD sind also auch hier frei schwebend gelagert und können keine Schleifspuren durch unbeabsichtigte Kontakte mit der Datenträgerverpackung erleiden.
Der Deckel 2 kann, abweichend von der Darstellung in Fig. 5, eine Tasche 26 für eine "inlay card" bzw. ein "booklet" aufweisen, wobei das letztere auch am Innenteil 20 des Deckels 2 befestigt sein kann.
Eine fünfte (nicht dargestellte), vereinfachte Ausführungsform umfasst Elemente der ersten bzw. zweiten Ausführungsform, gemäss Fig. 2 bzw. Fig. 3, wobei jedoch das Stützelement 24 weggelassen wird.

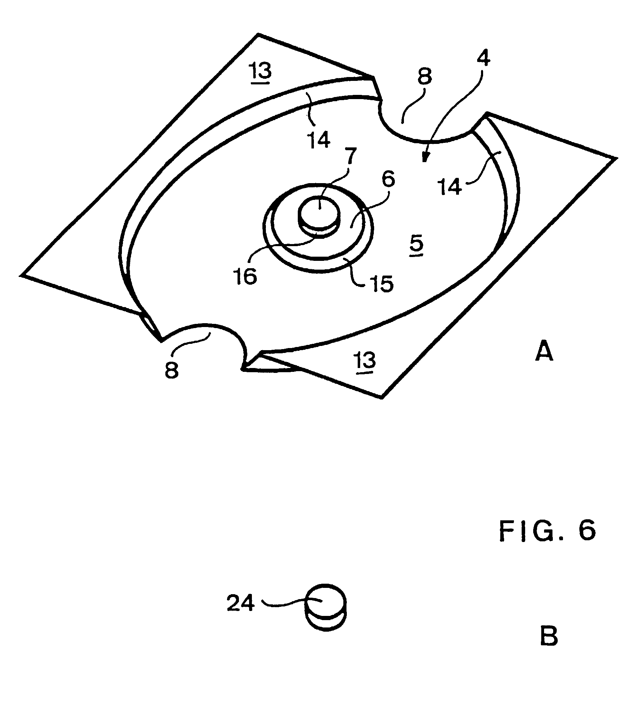

In den Figuren 6 bis 9 wird das erfindungsgemässe Verfahren zur Herstellung der einstückig verwendbaren Datenträgerverpackung bzw. ihrer Elemente beschrieben. Die angegebenen Beispiele sind keinesfalls als abschliessend zu betrachten, ebenso werden Variationen in den Prozessabläufen, Materialien und Dimensionen von der vorliegenden Erfindung umfasst.

Fig. 6a) zeigt ein Aufnahmeelement 4, gemäss einer zweiten bzw. dritten Ausführungsform der erfindungsgemässen Datenträgerverpackung 1. Die Funktion dieses Aufnahmeelements 4 umfasst - wie vorstehend beschrieben - die Aufnahme und die Arretierung des zu verpackenden Produktes bzw. Datenträgers im Innern der Datenträgerverpackung. Mittels der dafür speziell geformten Erhebungsfläche 6 wird beispielsweise eine CD in schwebender Position gehalten, wodurch deren abrufbare Daten tragende Bereiche vor Kratz-, Scheuer- und Schlagschäden geschützt sind. Rohlinge solcher Aufnahmeelemente 4 werden gemäss einem ersten, erfindungsgemässen Verfahren aus flachem Kartonmaterial einstückig gestanzt und gerillt. Anschliessend werden diese Rohlinge (vorzugsweise mit der gleichen Maschine) in ein Verformungswerkzeug bzw. eine Tiefziehform 28 befördert und unter Anwendung von Druck und Wärme einstückig in ihre endgültige Form gepresst. Die konzentrische Bauweise der oben beschriebenen Ausführungsformen der Aufnahmeelemente 4, insbesondere die konzentrische Anordnung der Erhebungsfläche 6, des Aufnahmezapfens 7 sowie der Innenwände 14, der Erhebungsstufe 15, der Stirnfläche 16 und der wahlweisen Zwischenstufe 25, unterstützt und erleichtert diese Herstellungsart eines einstückigen Aufnahmeelementes 4 wesentlich.

Eine weitere Ausführungsform für das Herstellen von Aufnahmeelementen 4 umfasst folgende Schritte:
Ein Faserstoffbrei wird auf eine (nicht dargestellte) Form aufgebracht und dann das im Faserstoffbrei enthaltene Wasser abgezogen. Der Rohling ist damit bereits in Form gebracht und braucht noch getrocknet zu werden. Zur höheren Veredelung des Werkstoffes kann der Faserstoffbrei vor der Trocknung gepresst werden, wodurch sich die Dichte des Materials und dessen Stabilität erhöht. Solche weiteren Ausführungsformen umfassen ein Fasergussverfahren bzw. ein Faserspritzverfahren, an welche jeweils vorzugsweise ein Pressen der Rohlinge anschliesst.

Die Herstellung eines Aufnahmeelements, gemäss einer ersten, vierten bzw. weiteren Ausführungsform, verläuft sinngemäss und wird hier nicht weiter beschrieben.

Fig. 6b) zeigt ein Stützelement 24, das eine im wesentlichen zylindrische Form aufweist, vorzugsweise mittels Ausstanzen aus einem flachen Pappebogen (Graukarton oder dergleichen) hergestellt und mit dem Stabilisierungselement 19 bzw. dem Aufnahmeelement 4 verklebt wird. Die Funktion dieses Stützelements 24 umfasst die Aufnahme eines Datenträgers (vergl. Fig. 2: Aufnahmezapfen 7 der ersten Ausführungsform) bzw. die Stützung des, einstückig mit dem Aufnahmeelement 4 hergestellten, Aufnahmezapfens 7. Dieser Aufnahmezapfen 7 deckt das Stützelement 24 vorzugsweise vollständig ab und reduziert dessen Ermüdung erheblich. Dadurch verlängert sich die Lebens- bzw. Funktionsdauer der Kombination Aufnahmezapfen/Stützelement.

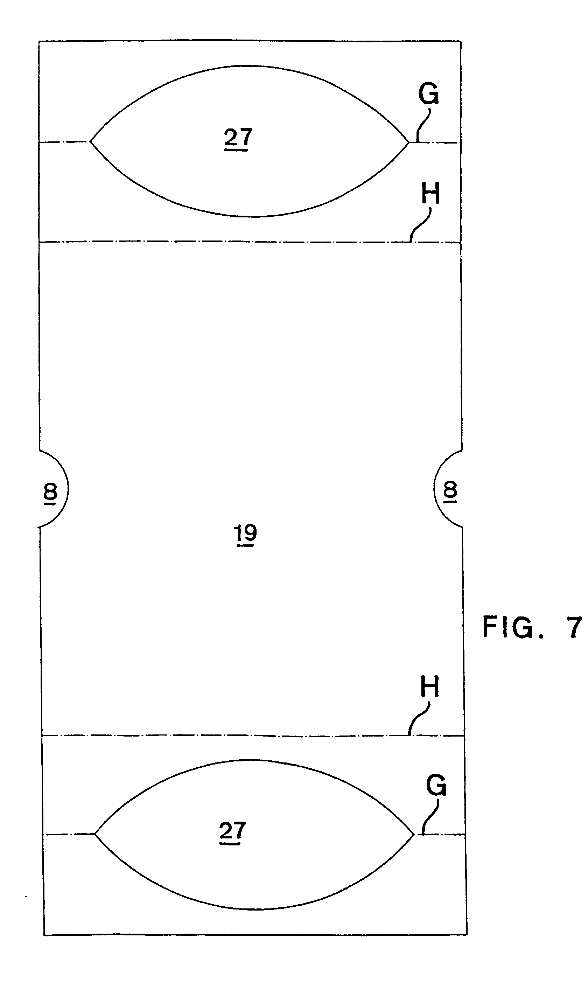

Die Funktion des in Fig. 7 dargestellten Stabilisierungselementes 19 umfasst die Positionierung des Aufnahmeelementes 4 und die Verstärkung der gesamten Verpackungseinheit, wodurch eine vorzügliche Schutzeigenschaft, Lagerfähigkeit, Stapelbarkeit, Transportstabilität und Lebensdauer der Datenträgerverpackung 1 erreicht wird. Die Form des Stabilisierungselementes 19 ist so gewählt, dass alle grösseren Hohlräume der Datenträgerverpackung 1 im wesentlichen ausgefüllt sind. Das in der Abwicklung dargestellte Stabilisierungselement 19 wird vorzugsweise aus flachen Wellpappebogen (E-Weile oder F-Welle). bzw. Vollpappe produziert. Dabei wird beispielsweise ein flacher Wellpappebogen auf einer Maschine gestanzt und gerillt, so dass aus dem Bogen ein oder mehrere flächige Stabilisierungselemente 19 entstehen. Das Stanzen der Aussparungen 27 und der Griffmulden 8 kann im selben Arbeitsgang vollzogen werden. Ein erfindungsgemässes einstückiges Stabilisierungselement 19 kann auch ausschliesslich durch Pressen und Stanzen hergestellt werden.

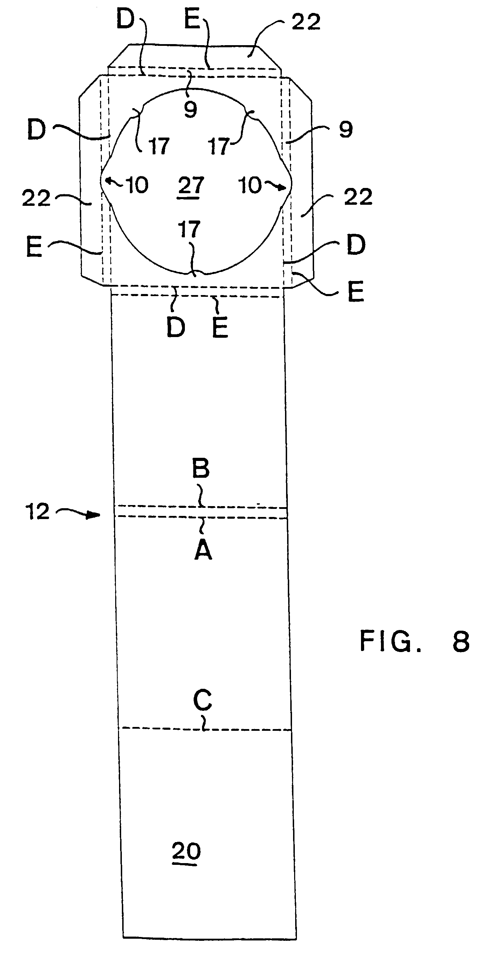

Die Funktion des in Fig. 8 dargestellten Hüllelements 12 umfasst die Aufnahme und Umhüllung aller anderen Elemente bzw. Teile der erfindungsgemässen Datenträgerverpackung und des zu verpackenden Produkts bzw. Datenträgers. Durch die erfindungsgemässe Faltung bildet sie aus den einzelnen Elementen der Verpackung eine kompakte Einheit. Wie oben beschrieben, kann der als Deckel 2 ausgebildete Teil des Hüllelements 12 ein Fach oder eine Tasche 26 zur Aufnahme von, als "booklets" oder "inlay card" bezeichneten, Beschreibungen 23 oder Prospekten aufweisen.
Das in der Abwicklung dargestellte Hüllelement 12 wird vorzugsweise aus flachen Kartonbogen produziert. Es kann ein- oder mehrfarbig bedruckt und/oder lackiert werden. Als weiterer Veredelungsschritt kann beispielsweise eine Blind-, Relief- oder Folienprägung vorgesehen werden. Danach wird der Bogen auf einer Maschine gestanzt und gerillt, so dass aus einem Bogen eines oder mehrere dieser noch flächigen Hüllelemente 12 entstehen. Gemäss der ersten bzw. zweiten Ausführungsform der erfindungsgemässen Datenträgerverpackung weist das Hüllelement 12 neben den Ausschnitten 10 in den Seitenwänden 9 ausserdem 3, an die Deckflächen 11 angeformte, Halteclips 17 auf. An die Seitenwände 9 sind Klebelaschen 22 angeformt. Der als Deckelinnenteil 20 vorgesehene bzw. der gerade daran anschliessende Bereich des Hüllelements 12 kann, zwecks Bildung einer Tasche 26 für eine Beschreibung 23 bzw. eine "inlay card", ebenfalls Klebelaschen 22 aufweisen. Diese sind, wie die Grifföffnung 21, hier nicht dargestellt.

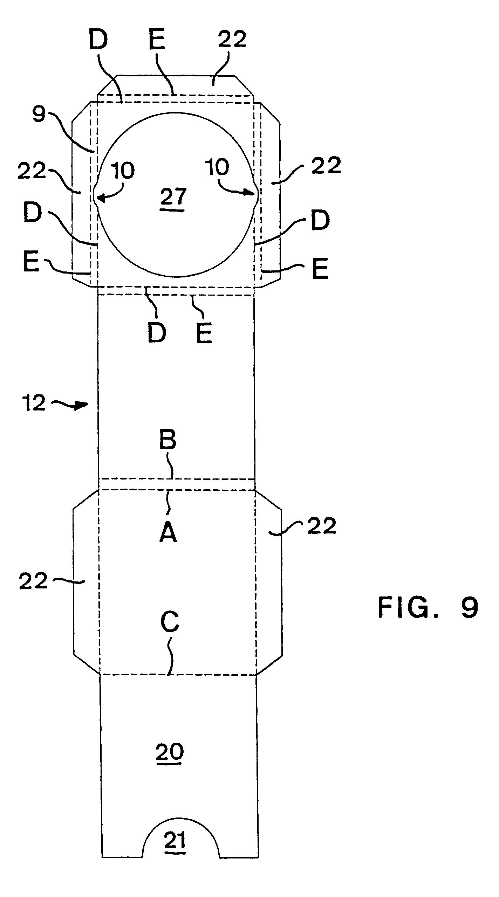

Die Funktion des in Fig. 9, gemäss der dritten bzw. vierten Ausführungsform der erfindungsgemässen Datenträgerverpackung dargestellten Hüllelements 12 entspricht derjenigen der ersten bzw. zweiten Ausführungsform. Das Hüllelement 12 weist Ausschnitte 10 in den Seitenwänden 9 auf. An die Seitenwände 9 sind Klebelaschen 22 angeformt. Der als Deckelinnenteil 20 vorgesehene bzw. der gerade daran anschliessende Bereich des Hüllelements 12 weist eine Grifföffnung 21 auf bzw. ist, zwecks Bildung einer Tasche 26 für eine Beschreibung 23 bzw. eine "inlay card", ebenfalls mit Klebelaschen 22 versehen. Auf die Ausbildung einer Tasche 26 kann, wie in Fig. 8 dargestellt, verzichtet werden.

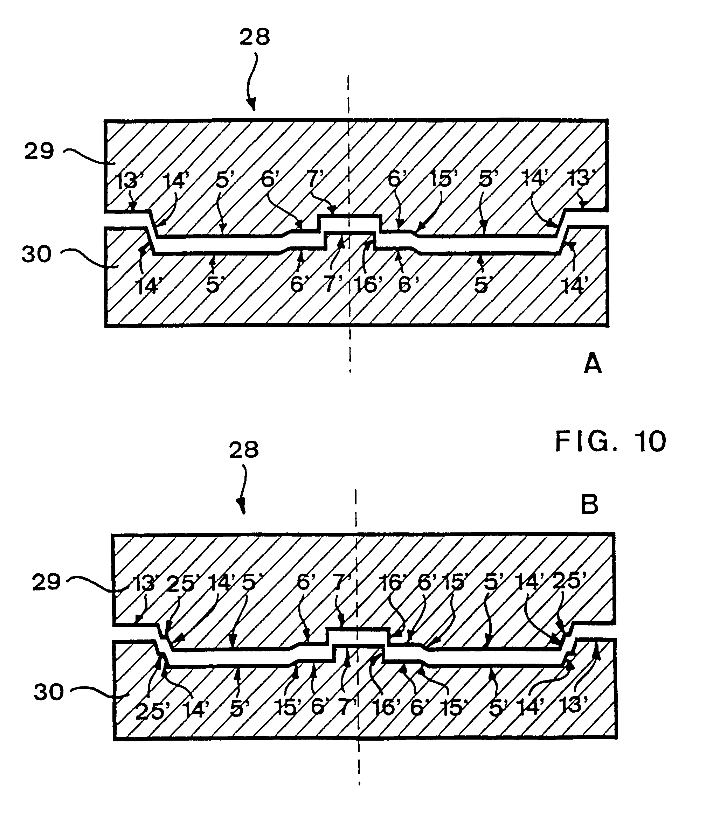

Die in Fig. 10a) als Beispiel dargestellte Tiefziehform 28 umfasst in einer ersten Ausführungsform die Einrichtungen zum In-die-Form-Pressen eines Aufnahmeelementes 4 einer Datenträgerverpackung 1, gemäss einer zweiten und dritten Ausführungsform.
Die in Fig. 10b) als Beispiel dargestellte Tiefziehform 28 umfasst in einer zweiten Ausführungsform die Einrichtungen zum In-die-Form-Pressen eines Aufnahmeelementes 4 einer Datenträgerverpackung 1, gemäss einer vierten Ausführungsform. Die Formflächen des Stempels 29 und der Matrize 30 der Tiefziehform 28 wurden entsprechend den Flächen des damit in die Form zu pressenden Aufnahmeelementes 4, mit 5', 6', 7', 13', 14', 15', 16' und 25' bezeichnet.
Eine weitere (nicht dargestellte) Ausführungsform einer Tiefziehform 28 zur Verwendung in einem erfindungsgemässen Verfahren zur Herstellung einer Datenträgerverpackung kann Mittel zum Ausstanzen einer zentralen Aussparung umfassen, durch welche ein Stützelement 24 mit der Funktion eines Aufnahmezapfens 7, gemäss einer ersten Ausführungsform einer Datenträgerverpackung 1, gesteckt werden kann. Obwohl mit der Verwendung dieser speziellen Tiefziehform auf die Ausbildung eines Aufnahmezapfens 7 am Aufnahmeelement 4 verzichtet wird, weist die erfindungsgemässe Datenträgerverpackung 1 somit trotzdem einen Aufnahmezapfen auf.

Das verwendete Monomaterial zur Herstellung der Datenträgerverpackung 1 ist, wie aus der Beschreibung hervorgeht, ein vorzugsweise flächiger Werkstoff, dessen Grundmaterial im wesentlichen aus gattungsgleichen Naturfasern, meist pflanzlicher, tierischer oder auch mineralischer Herkunft, durch Entwässern einer Faserstoffaufschlämmung gebildet wird. Wahlweise können auch geringe Anteile an synthetischen Fasern beigemischt sein. Alle Teile der Verpackung bestehen grundsätzlich aus rezyklierten bzw. rezyklierbaren und vorzugsweise auch aus biodegradierbaren Materialien wie Karton und Papier, so dass diese Datenträgerverpackung 1 als Monoverpackung bezeichnet werden darf. In einigen Ländern gelten als Monoverpackungen, wenn diese einen Fremdstoffanteil von weniger als 5 % aufweisen; trotzdem werden vorzugsweise Farben, Lacke und Klebemittel verwendet, welche umweltfreundlich einzusetzen und zu entsorgen sind. Insofern mineralische bzw. synthetische Fasern die Ansprüche bezüglich Rezyklierbarkeit und Biodegradierbarkeit erfüllen, können sie ebenfalls als Rohstoffe eingesetzt werden.

In weiteren Arbeitsgängen (vorzugsweise in einer einzigen Maschine) werden die einzelnen Elemente der Datenträgerverpackung 1 gemäss einem erfinderischen Verfahren wie nachstehend beschrieben gefaltet, geklebt und zusammengefügt. Die Verarbeitung der einzelnen Elemente verläuft dabei vorzugsweise gleichzeitig, so dass deren Endmontage zur Datenträgerverpackung taktmässig ausgeführt werden kann. Alle beschriebenen Elemente einer erfindungsgemässen Datenträgerverpackungen 1 sind nach dem vollendeten Zusammenfügen untrennbar miteinander verbunden, sie können ohne Zerstörung der Datenträgerverpackung nicht voneinander getrennt werden. In weiteren Ausführungsformen können die Elemente der erfindungsgemässen Datenträgerverpackung mindestens teilweise trennbar (beispielsweise mittels Einstecken) zusammengefügt sein. Auch können einzelne Bauteile einer Datenträgerverpackung 1 eines oder mehrere Elemente umfassen, so dass beispielsweise das Aufnahmeelement 4 und das Stützelement 24 bzw. das Aufnahmeelement 4, das Stützelement 24 und das Stabilisationselement 19 jeweils zusammen einstückig hergestellt werden.

Der Datenträger ist nicht Bestandteil der Erfindung.

### Ausführungsform 1:

Am Hüllelement 12 wird zuerst der Deckel 2 entlang der Linie C gefaltet und - falls eine Tasche 26 vorgesehen ist - mit den Klebelaschen 22, oder sonst vollflächig verklebt. Ein Stabilisierungselement 19 wird entlang der in Fig. 7 mit G bzw. H bezeichneten Linien nach hinten bzw. nach vorne gefaltet und vorzugsweise vollflächig verklebt. Ein Aufnahmeelement 4 wird auf das Stabilisierungselement 19 geklebt. Ein Aufnahmezapfen 7 pro Aufnahmeelement 4 wird durch die entsprechende Aussparung im Aufnahmeelement 4 gesteckt und mit dem Stabilisierungselement 19 verklebt.
Diese eben gebildete Einheit wird umgedreht und auf die Seite der Hülle 12 geklebt, in welcher sich die runde Aussparung 27 befindet. Die drei kurzen Seitenwände 9 werden nun entlang der Linien D aufgerichtet und mit ihren Klebelaschen 22 entlang der Linien E gefaltet und auf die Rückseite des Stabilisierungselementes 19 geklebt.

Der letzte Schritt besteht nun darin, dass die Seite, auf welcher sich die aufgeklebten Teile befinden, entlang der Linien E und D komplett umgelegt und vollflächig verklebt wird.
Die so entstandene Datenträgerverpackung 1 kann in offenem Zustande gestapelt und verpackt oder direkt der Beschickung mit je einem Datenträger zugeführt werden.

### Ausführungsform 2, 3 und 4:

Am Hüllelement 12 wird zuerst der Deckel 2 entlang der Linie C gefaltet und - falls eine Tasche 26 vorgesehen ist - mit den Klebelaschen 22, oder sonst vollflächig verklebt. Ein Stabilisierungselement 19 wird entlang der in Fig. 7 mit G bzw. H bezeichneten Linien nach hinten bzw. nach vorne gefaltet und vorzugsweise vollflächig verklebt. Je ein Stützelement 24 pro Aufnahmeelement 4 wird an dessen Unterseite in den Aufnahmezapfen eingeklebt. Ein Aufnahmeelement 4 wird auf das Stabilisierungselement 19 geklebt.
Diese eben gebildete Einheit wird umgedreht und die Datenträgerverpackung 1, entsprechend derjenigen der ersten Ausführungsform, fertiggestellt.

Die so entstandene Datenträgerverpackung 1 kann in offenem Zustande gestapelt und verpackt oder direkt der Beschickung mit je einem Datenträger zugeführt werden.

In Abweichung von den beschriebenen Ausführungsformen weisen erfindungsgemässe Datenträgerverpackungen, gemäss einer sechsten bevorzugten (nicht dargestellten) Ausführungsform, anstelle des Deckels 2 ein weiteres Aufnahmeelement 4 mit allen Elementen der ersten bis fünften Ausführungsform auf, wodurch eine Verpackung für zwei Datenträger geschaffen wird.

Als alternative Haftverbindungen zwischen dem Aufnahmeelement 4, dem Stützelement 24, dem Stabilisierungselement 19 und/oder dem Hüllelement 12 kommen neben dem Kleben, beispielsweise das Leimen, Schweissen oder Pressen in Frage.

Weitere erfindungsgemässe Ausführungsformen umfassen:
- Die Ausbildung einer Erhebungsfläche im Deckelinnenteil 20, welche einen Abstand zwischen Deckel und Datenträger bewirkt.
- Die zweiteilige Ausführung des Deckels 2, wobei die klappbaren Teile in der Grösse gleich oder verschieden sind.
- Einen zweiteiligen Deckel, dessen einer Teil durch den anderen Teil verriegelbar ist.
- Zwei gleich grosse Deckelteile, welche am bzw. im Aufnahmezapfen eingreifen und damit eine Verriegelung des Deckels bewirken.
- Eine Datenträgerverpackung, welche anstatt eines Aufnahmezapfens, zwei oder mehrere solche in einer Ebene umfasst. Damit wird eine handliche Datenträgerverpackung für beispielsweise drei bis sieben Mini Discs geschaffen, welche vorzugsweise in einer dichten Anordnung befestigt sind.
- Aufnahmezapfen 7, welche von der runden, zylindrischen Form abweichen. Sie können dabei gerade Stirnflächen 16 und einen polyedrischen oder kreuz- bzw. sternförmigen oder auch gekrümmte Stirnflächen 16 und einen zylindrisch gewellten Querschnitt aufweisen. Für diese Ausführungsformen speziell geeignet ist die Herstellung der Aufnahmeelemente 4 mittels Faserguss- bzw. Faserspritzverfahren.
- Halteclips 17 bzw. einen Aufnahmezapfen 7, welche einen Datenträger 18 am Ausführen einer Bewegung mit einer zum Boden der Vertiefung 5 senkrechten Komponente hindern.

## Patentansprüche

1. Verfahren zur Herstellung einer Datenträgerverpackung (1) - zur Aufnahme mindestens eines im wesentlichen runden, eine zentrale Öffnung aufweisenden Datenträgers, insbesondere Compact Disc (CD), Video Disc (VD) oder Mini Disc (MD) - mit einem Deckel (2) und einem Aufnahmeteil (3), welcher ein Aufnahmeelement (4) und einen Aufnahmezapfen (7) zur Aufnahme und Zentrierung eines Datenträgers (18) an seiner zentralen Öffnung umfasst, **gekennzeichnet durch** das Anordnen eines Stabilisierungselementes (19) zum Ausfüllen von Hohlräumen sowie eines Hüllelementes (12) zur Aufnahme und Umhüllung aller anderen Elemente der Datenträgerverpackung (1) und des zu verpackenden Datenträgers, wobei alle Elemente aus gattungsgleichem Monomaterial zusammengefügt werden und wobei das Monomaterial aus zumindest 95 %, im wesentlichen gattungsleichen Naturfasern besteht.

2. Verfahren nach Anspruch 1, **dadurch gekennzeichnet, dass** die Ausbildung dieses Aufnahmeelementes (4) mittels Tiefverformung bzw. die Herstellung dieses Aufnahmeelementes (4) mittels eines Faserguss- oder Faserspritzverfahrens erfolgt.

3. Verfahren nach Anspruch 1 der 2, **dadurch gekennzeichnet, dass** der Aufnahmezapfen (7) einstückig mit dem Aufnahmeelement (4) ausgebildet, bzw. hergestellt wird.

4. Verfahren nach einem der Ansprüche 1 bis 3, **dadurch gekennzeichnet, dass** der Aufnahmeteil (3) zudem ein Stützelement (24) zur Bildung bzw. Stützung des Aufnahmezapfens (7) umfasst, wobei alle Elemente untrennbar zusammengefügt werden.

5. Verfahren nach einem der Ansprüche 1 bis 4, **dadurch gekennzeichnet, dass** das Aufnahmeelement (4) und/oder das Stützelement (24) und/oder das Stabilisierungselement (19) und/oder das Hüllelement (12) untereinander haft-verbunden werden.

6. Verfahren nach einem der Ansprüche 1 bis 4, **dadurch gekennzeichnet, dass** das Aufnahmeelement (4) und/oder das Stützelement (24) und/oder das Stabilisierungselement (19) und/oder das Hüllelement (12) einstückig hergestellt werden.

7. Verfahren nach einem der Ansprüche 1 bis 6, **dadurch gekennzeichnet, dass** zum einstückigen Herstellen des Aufnahmeelementes (4) eine Tiefziehform (28) verwendet wird.

8. Verfahren nach Anspruch 7, **dadurch gekennzeichnet, dass** die Tiefziehform (28) Formflächen (5', 6', 13', 14' und 15') umfasst, mit welchen eine Vertiefung (5), eine Erhebungsfläche (6), zur Erhebungsfläche (6) konzentrische Innenwände (14), die in hochliegende Teile (13) übergehen sowie eine Erhebungsstufe (15) des Aufnahmeelementes (4) in Form gepresst werden.

9. Verfahren nach Anspruch 7 oder 8, **dadurch gekennzeichnet, dass** die Tiefziehform Formflächen (6', 7' und 16') umfasst, mit welchen eine Erhebungsfläche (6) und ein zur Erhebungsfläche (6) konzentrischer Aufnahmezapfen (7) mit einer Stirnfläche (16) in Form gepresst werden.

10. Verfahren nach einem der Ansprüche 7 bis 9, **dadurch gekennzeichnet, dass** die Tiefziehform eine Formfläche (25') umfasst, mit welcher im Bereich der Innenwände (14) des Aufnahmeelementes (4) Zwischenstufen (25) in Form gepresst werden.

11. Datenträgerverpackung (1) in der Form einer Schachtel - zur Aufnahme mindestens eines im wesentlichen runden, eine zentrale Öffnung aufweisenden Datenträgers, insbesondere Compact Disc (CD), Video Disc (VD) oder Mini Disc (MD) - mit einem Deckel (2) und einem Aufnahmeteil (3), welcher ein Aufnahmeelement (4) mit einer Erhebungsfläche (6) zur Stützung eines Datenträgers (18) im zentralen Bereich, der keine abrufbaren Daten aufweist und einen Aufnahmezapfen (7) zur Aufnahme und Zentrierung dieses Datenträgers an seiner zentralen Öffnung umfasst, **gekennzeichnet durch** ein Stabilisierungselement (19) zum Ausfüllen von Hohlräumen sowie ein Hüllelement (12) zur Aufnahme und Umhüllung aller anderen Elemente der Datenträgerverpackung (1) und des zu verpackenden Datenträgers, wobei alle Elemente aus gattungsgleichem Monomaterial zusammengefügt sind und wobei das Monomaterial aus zumindest 95 %, im wesentlichen gattungsleichen Naturfasern besteht.

12. Datenträgerverpackung nach Anspruch 11, **dadurch gekennzeichnet, dass** das Aufnahmeelement (4) mittels Tiefverformung ausgebildet bzw. mittels eines Faserguss- oder Faserspritzverfahrens hergestellt ist.

13. Datenträgerverpackung nach Anspruch 11 oder 12, **dadurch gekennzeichnet, dass** der Aufnahmezapfen (7) einstückig mit dem Aufnahmeelement (4) ausgebildet, bzw. hergestellt ist.

14. Datenträgerverpackung nach einem der Ansprüche 11 bis 13, **dadurch gekennzeichnet, dass** der Aufnahmeteil (3) zudem ein Stützelement (24) zur Bildung bzw. Stützung des Aufnahmezapfens (7) umfasst.

15. Datenträgerverpackung nach einem der Ansprüche 11 bis 14, **dadurch gekennzeichnet, dass** der Aufnahmezapfen (7) so dimensioniert ist, dass er die zentrale Öffnung eines eingesetzten Datenträgers (18) im wesentlichen ausfüllt und diesen mindestens am Ausführen einer zum Boden einer Vertiefung (5) parallelen Bewegung hindert.

16. Datenträgerverpackung nach einem der Ansprüche 14 oder 15, **dadurch gekennzeichnet, dass** das Stützelement (24) als Aufnahmezapfen (7) ausgebildet ist und durch eine Öffnung im Aufnahmeelement (4) reicht.

17. Datenträgerverpackung nach einem der Ansprüche 11 bis 16, **dadurch gekennzeichnet, dass** das Hüllelement (12) Deckflächen (11) mit daran angeformten Halteclips (17) umfasst, welche einen Datenträger (18) am Ausführen einer Bewegung mit einer zum Boden der Vertiefung (5) senkrechten Komponente hindern.

18. Datenträgerverpackung nach einem der Ansprüche 11 bis 16, **dadurch gekennzeichnet, dass** der Aufnahmezapfen (7) so dimensioniert ist, dass er diesen Datenträger (18) am Ausführen einer Bewegung mit einer zum Boden der Vertiefung (5) senkrechten Komponente hindert.

19. Datenträgerverpackung nach Anspruch 17 oder 18, **dadurch gekennzeichnet, dass** das Aufnahmeelement (4) Innenwände (14) umfasst, welche einen eingesetzten Datenträger (18) an seinem Umfang nicht berühren und welchem hochliegende Teile (13) einstückig angeformt sind.

20. Datenträgerverpackung nach Anspruch 19, **dadurch gekennzeichnet, dass** die Innenwände (14) den eingesetzten Datenträger (18) kreisförmig und konisch umschliessen.

21. Datenträgerverpackung nach Anspruch 19 oder 20, **dadurch gekennzeichnet, dass** das Aufnahmeelement (4) im Bereich der Innenwände (14) eine Zwischenstufe (25) umfasst.

22. Datenträgerverpackung nach einem der vorhergehenden Ansprüche 11 bis 21, **dadurch gekennzeichnet, dass** das Grundmaterial, aus dem die Datenträgerverpackung hergestellt ist, rezyklierte bzw. rezyklierbare und/oder biodegradierbare Stoffe umfasst.

23. Datenträgerverpackung nach einem der vorhergehenden Ansprüche 11 bis 22, **dadurch gekennzeichnet, dass** der Deckel (2) eine Tasche (26) für eine Beschreibung (23) umfasst bzw. dass die Beschreibung (23) mit dem Deckel (2) unlösbar verbunden ist.

## Claims

1. Method for producing a data medium package (1) - for accommodating at least one essentially round data medium having a central opening, in particular a compact disk (CD), video disk (VD) or mini disk (MD) - having a cover (2) and a holding part (3), which comprises a holding element (4) and a holding pin (7) for holding and centring a data medium (18) on its central opening, **characterized** by the arrangement of a stabilization element (19) for filling cavities, and a case element (12) for holding and encasing all the other elements of the data medium package (1) and of the data medium to be packed, in which case all the elements are assembled from a single material of the same generic type, and in which at least 95% of the single material is composed of natural fibres of essentially the same generic type.

2. Method according to Claim 1, **characterized in that** this holding element (4) is formed by means of deep drawing, or this holding element (4) is produced by means of a fibre moulding or fibre spraying method.

3. Method according to Claim 1 or 2, **characterized in that** the holding pin (7) is formed or produced integrally with the holding element (4).

4. Method according to one of Claims 1 to 3, **characterized in that** the holding part (3) also comprises a supporting element (24) for forming or supporting the holding pin (7), in which all the elements are joined together such that they cannot be disconnected.

5. Method according to one of Claims 1 to 4, **characterized in that** the holding element (4) and/or the supporting element (24) and/or the stabilization element (19) and/or the case element (12) are adhesively bonded to one another.

6. Method according to one of Claims 1 to 4, **characterized in that** the holding element (4) and/or the supporting element (24) and/or the stabilization element (19) and/or the case element (12) are produced integrally.

7. Method according to one of Claims 1 to 6, **characterized in that** a deep drawing mould (28) is used for integral production of the holding element (4).

8. Method according to Claim 7, **characterized in that** the deep drawing mould (28) comprises mould surfaces (5', 6', 13', 14' and 15') by means of which a depression (5), a raised area (6), inner walls (14) which are concentric to the raised area (6) and merge into raised parts (13) as well as a raised step (15) of the holding element (4) can be pressed in the mould.

9. Method according to Claim 7 or 8, **characterized in that** the deep drawing mould comprises mould surfaces (6', 7' and 16') by means of which a raised area (6) and a holding pin (7) which is concentric to the raised area (6) and has an end surface (16) are pressed in the mould.

10. Method according to one of Claim 7 to 9, **characterized in that** the deep drawing mould comprises a mould surface (25') by means of which intermediate steps (25) in the region of the inner walls (14) of the holding element (4) can be pressed in the mould.

11. Data medium package (1) in the form of a box - for accommodating at least one essentially round data medium having a central opening, in particular a compact disk (CD), video disk (VD) or mini disk (MD) - having a cover (2) and a holding part (3), which comprises a holding element (4) with a raised area (6) for supporting a data medium (18) in the central region , where there are no data which can be called up, and a holding pin (7) for holding and centring this data medium on its central opening **characterized** by a stabilization element (19) for filling cavities and a case element (12) for holding and encasing all the other elements of the data medium package (1) and of the data medium to be packed, in which case all the elements are assembled from a single material of the same generic type, and in which at least 95% of the single material is composed of natural fibres of essentially the same generic type.

12. Data medium package according to Claim 11, **characterized in that** the holding element (4) is formed by means of deep drawing or is produced by means of a fibre moulding or fibre spraying method.

13. Data medium package according to Claim 11 or 12, **characterized in that** the holding pin (7) is formed or produced integrally with the holding element (4).

14. Data medium package according to one of Claims 11 to 13, **characterized in that** the holding part (3) also comprises a supporting element (24) for forming or supporting the holding pin (7).

15. Data medium package according to one of Claims 11 to 14, characterized in that the holding pin (7) is designed such that it essentially fills the central opening in a data medium (18) which has been inserted, and prevents this data medium (18) at least from carrying out any movement parallel to the base of a depression (5).

16. Data medium package according to one of Claims 14 or 15, **characterized in that** the supporting element (24) is designed as the holding pin (7) and extends through an opening in the holding element (4).

17. Data medium package according to one of Claims 11 to 16, **characterized in that** the case element (12) comprises covering surfaces (11) with retaining clips (17) which are integrally formed on them and prevent a data medium (18) from carrying out any movement with a component at right angles to the base of the depression (5).

18. Data medium package according to one of Claims 11 to 16, **characterized in that** the holding pin (7) is designed such that it prevents this data medium (18) from carrying out any movement with a component at right angles to the base of the depression (5).

19. Data medium package according to Claim 17 or 18, **characterized in that** the holding element (4) comprises inner walls (14) which do not touch the circumference of an inserted data medium (18) and on which raised parts (13) are integrally formed.

20. Data medium package according to Claim 19, **characterized in that** the inner walls (14) enclose the inserted data medium (14) in a circular or conical shape.

21. Data medium package according to Claim 19 or 20, **characterized in that** the holding element (4) comprises an intermediate step (25) in the region of the inner walls (14).

22. Data medium package according to one of the preceding Claims 11 to 21, **characterized in that** the basic material from which the data medium package is produced comprises materials which have been or can be recycled and/or are biodegradable.

23. Data medium package according to one of the preceding Claims 11 to 22, **characterized in that** the cover (2) comprises a pocket (26) for a description (23) or in that the description (23) is connected to the cover (2) such that it cannot be detached.

## Revendications

1. Procédé pour la fabrication d'un conditionnement de support de données (1) - pour la réception d'au moins un support de données essentiellement rond présentant une ouverture centrale, en particulier un Compact Disc (CD), un Video Disc (VD) ou un Mini Disc (MD) - comprenant un couvercle (2) et une partie de réception (3) qui comprend, à son ouverture centrale, un élément de réception (4) et un nez de centrage (7) pour la réception et le centrage d'un support de données (18), caractérisé par l'agencement d'un élément de stabilisation (19) destiné à remplir des espaces creux, ainsi que d'un élément d'enveloppe (12) pour la réception et l'enveloppement de tous les autres éléments du conditionnement de support de données (1) et du support de données à conditionner, dans lequel tous les éléments sont assemblés à partir d'une matière unique de la même espèce et dans lequel la matière unique est constituée, au moins à concurrence de 95%, par des fibres naturelles essentiellement de la même espèce.

2. Procédé selon la revendication 1, caractérisé en ce que la réalisation de cet élément de réception (4) a lieu par emboutissage, respectivement la fabrication de cet élément de réception (4) a lieu à l'aide d'un procédé de moulage en utilisant des fibres ou de pulvérisation en utilisant des fibres.

3. Procédé selon la revendication 1 ou 2, caractérisé en ce que le nez de centrage (7) est réalisé, respectivement fabriqué en une seule pièce avec l'élément de réception (4).

4. Procédé selon l'une quelconque des revendications 1 à 3, caractérisé en ce que l'élément de réception (3) comprend en outre un élément d'appui (24) pour la formation, respectivement l'appui du nez de centrage (7), tous les éléments étant assemblés de manière inséparable.

5. Procédé selon l'une quelconque des revendications 1 à 4, caractérisé en ce que l'élément de réception (4) et/ou l'élément d'appui (24) et/ou l'élément de stabilisation (19) et/ou l'élément d'enveloppement (12) sont reliés l'un à l'autre par adhérence.

6. Procédé selon l'une quelconque des revendications 1 à 4, caractérisé en ce que l'élément de réception (4) et/ou l'élément d'appui (24) et/ou l'élément de stabilisation (19) et/ou l'élément d'enveloppement (12) sont fabriqués en une seule pièce.

7. Procédé selon l'une quelconque des revendications 1 à 6, caractérisé en ce qu'on utilise un moule d'emboutissage (28) pour la fabrication en une seule pièce de l'élément de réception (4).

8. Procédé selon la revendication 7, caractérisé en ce que le moule d'emboutissage (28) comprend des surfaces de façonnement (5', 6', 13', 14' et 15') avec lesquelles on peut façonner par compression un renfoncement (5), une surface d'élévation (6), des parois internes (14) concentriques à la surface d'élévation (6) qui se transforment en parties surélevées (13), ainsi qu'un gradin d'élévation (15) de l'élément de réception (4).

9. Procédé selon la revendication 7 ou 8, caractérisé en ce que le moule d'emboutissage comprend des surfaces de façonnement (6', 7' et 16') avec lesquelles on peut façonner par compression une surface d'élévation (6) et un nez de centrage (7) comprenant une surface frontale (16), concentrique à la surface d'élévation (6).

10. Procédé selon l'une quelconque des revendications 7 à 9, caractérisé en ce que le moule d'emboutissage comprend une surface de façonnement (25') avec laquelle on façonne par compression des gradins intermédiaires (25) dans la zone des parois internes (14) de l'élément de réception (4).

11. Conditionnement de support de données (1) sous la forme d'une boîte - pour la réception d'au moins un support de données essentiellement rond présentant une ouverture centrale, en particulier un Compact Disc (CD), un Video Disc (VD) ou un Mini Disc (MD) - comprenant un couvercle (2) et une partie de réception (3) qui comprend un élément de réception (4) comprenant une surface d'élévation (6) pour que vienne s'y appuyer un support de données (18) dans la zone centrale qui ne présente pas de données aptes à être extraites, ainsi qu'un nez de centrage (7) pour la réception et le centrage de ce support de données (18), caractérisé par un élément de stabilisation (19) destiné à remplir des espaces creux, ainsi que par un élément d'enveloppe (12) pour la réception et l'enveloppement de tous les autres éléments du conditionnement de support de données (1) et du support de données à conditionner, dans lequel tous les éléments sont assemblés à partir d'une matière unique de la même espèce et dans lequel la matière unique est constituée, au moins à concurrence de 95%, par des fibres naturelles essentiellement de la même espèce.

12. Conditionnement de support de données selon la revendication 11, caractérisé en ce que l'élément de réception (4) est réalisé par emboutissage, respectivement est fabriqué à l'aide d'un procédé de moulage en utilisant des fibres ou de pulvérisation en utilisant des fibres.

13. Conditionnement de support de données selon la revendication 11 ou 12, caractérisé en ce que le nez de centrage (7) est réalisé, respectivement fabriqué en une seule pièce avec l'élément de réception (4).

14. Conditionnement de support de données selon l'une quelconque des revendications 11 à 13, caractérisé en ce que l'élément de réception (3) comprend en outre un élément d'appui (24) pour la formation, respectivement l'appui du nez de centrage (7).

15. Conditionnement de support de données selon l'une quelconque des revendications 11 à 14, caractérisé en ce que le nez de centrage (7) est dimensionné de telle sorte qu'il remplit essentiellement l'ouverture centrale d'un support de données inséré (18) et empêche ce dernier au moins d'effectuer un mouvement parallèle au fond d'un renfoncement (5).

16. Conditionnement de support de données selon l'une quelconque des revendications 14 ou 15, caractérisé en ce que l'élément d'appui (24) est réalisé sous la forme d'un nez de centrage (7) et traverse une ouverture pratiquée dans l'élément de réception (4).

17. Conditionnement de support de données selon l'une quelconque des revendications 11 à 16, caractérisé en ce que l'élément d'enveloppe (12) comprend des surfaces de recouvrement (11) sur lesquelles sont façonnées des pinces de retenue (17) qui empêchent un support de données (18) d'effectuer un mouvement dont une composante est perpendiculaire au fond du renfoncement (5).

18. Conditionnement de support de données selon l'une quelconque des revendications 11 à 16, caractérisé en ce que le nez de centrage (7) est dimensionné de telle sorte qu'il empêche ce support de données (18) d'effectuer un mouvement dont une composante est perpendiculaire au fond du renfoncement (5).

19. Conditionnement de support de données selon la revendication 17 ou 18, caractérisé en ce que l'élément de réception (4) comprend des parois internes (14) qui ne touchent pas la périphérie d'un support de données inséré (18) et sur lesquelles sont façonnées en une seule pièce des parties surélevées (13).

20. Conditionnement de support de données selon la revendication 19, caractérisé en ce que les parois internes (14) entourent le support de données inséré (18) en formant un cercle et en formant un cône.

21. Conditionnement de support de données selon la revendication 19 ou 20, caractérisé en ce que l'élément de réception (4) comprend un gradin intermédiaire (25) dans la zone des parois internes (14).

22. Conditionnement de support de données selon l'une quelconque des revendications précédentes 11 à 21, caractérisé en ce que la matière de base, à partir de laquelle on fabrique le conditionnement du support de données, comprend des substances recyclées, respectivement recyclables et/ou biodégradables.

23. Conditionnement de support de données selon l'une quelconque des revendications précédentes 11 à 21, caractérisé en ce que le couvercle (2) comprend une poche (26) pour une description (23), respectivement en ce que la description (23) est reliée de manière inamovible au couvercle (2).
